# EUROPEAN PATENT SPECIFICATION

(11) **EP 2 716 938 B1**
(45) Date of publication and mention of the grant of the patent: **27.04.2016**
(21) Application number: 13187033.9
(22) Date of filing: 02.10.2013
(51) Int. Cl.: F16H 61/16

(54) **Straddle-type vehicle with downshift restriction means**
Grätschsitz-Fahrzeug mit rückschaltbegrenzung
Véhicule de type à enfourcher avec système de restriction de retrogradage

(30) Priority: 03.10.2012 JP 2012221007
(43) Date of publication of application: 09.04.2014
(73) Proprietor: Yamaha Hatsudoki Kabushiki Kaisha, Iwata-shi, Shizuoka 438-8501 (JP)
(72) Inventor: Fukushima, Kenji, Iwata-shi, Shizuoka 438-8501 (JP)
(74) Representative: Grünecker Patent- und Rechtsanwälte PartG mbB

(56) References cited:
- US-A1- 2006 037 802
- US-A1- 2007 186 705
- US-A1- 2010 010 717

## Description

This invention relates to a straddle-type vehicle that controls a clutch and a transmission and a method for controlling such straddle-type vehicle.

Some of motorcars that control transmission ratio according to operating states of vehicles execute processing of hastening the time when the transmission ratio is changed toward the low-speed, i.e., the time of shift-down when a braking force by a braking device is applied to the vehicle. JP 2008-215574 A has disclosed a controller for motorcar having a first map defining a relationship between a vehicle speed at which the transmission ratio is changed and an amount of accelerator operation, and a second map defining a relationship between the vehicle speed at which the transmission ratio is changed and a brake hydraulic pressure. The second map is used when the brake works, and thereby, an engine brake may be positively used. A straddle-type vehicle disclosing the features of the preamble of claims 1 and 8 is known from US2007/0186705.

In a motorcycle provided with a brake operation member operated by foot or hand and an accelerator operation member operated by hand, accelerator operation and brake operation can be performed at the same time. Accordingly, a rider may perform brake operation for a purpose different from speed reduction while keeping an intention of acceleration. For example, when a U-turn (reversal of the traveling direction) is executed, an operation of activating the rear wheel brake is performed while the amount of accelerator operation is maintained or increased. Making the time of shift down earlier than normal when the brake operation is performed for the purpose different from speed reduction is not suitable for the intention of the rider.

An object of the invention is to provide a straddle-type vehicle and a method for controlling a straddle-type vehicle that can suppress change of a transmission ratio toward low-speed under a situation where the change is not suitable for a rider's intention.

According to the present invention said object is solved by a straddle-type vehicle having the features of independent claim 1. Moreover, said object is also solved by a method for controlling a straddle-type vehicle having the features of independent claim 8. Preferred embodiments are laid down in the respective dependent claims.

A straddle-type vehicle according to an embodiment includes a transmission; an actuator that operates the transmission to change a transmission ratio thereof; a controller that controls the transmission ratio of the transmission by means of the actuator; a braking device that applies a braking force to the vehicle; and an accelerator operation member for a rider to operate. The controller includes a normal processing unit that determines timing of change of the transmission ratio toward a low-speed according to an amount of operation of the accelerator operation member; and a brake activation time processing unit that determines the timing of change of the transmission ratio toward the low-speed when the braking device is activated, where the timing is determined according to a degree of activation of the braking device. The controller restricts the change of the transmission ratio toward the low-speed the timing of which is determined by the brake activation time processing unit, when the braking device is activated and the accelerator operation member is operated.

According to the straddle-type vehicle, when the braking device is activated, the change of the transmission ratio toward the low-speed is executed at a time according to the degree of activation of the braking device. As a result, when the braking device is activated, the time to change the transmission ratio toward the low-speed can be made earlier than the time according to the amount of accelerator operation. That is, when the braking device is activated, the change of the transmission ratio toward the low-speed can be performed at a vehicle speed higher than the vehicle speed according to the amount of accelerator operation. As a result, the engine brake may be used more effectively. When the braking device is activated and the accelerator operation member is operated, i.e., the rider has no intention of speed reduction, the change of the transmission ratio toward the low-speed at the time determined by the brake activation time processing unit is restricted, and the action of the large engine brake can be suppressed. Note that "restriction of the change of the transmission ratio toward the low-speed" includes prohibition of the change of the transmission ratio toward the low-speed and delaying of the time of the change.

The controller may prohibit the change of the transmission ratio toward the low-speed when the braking device is activated and the accelerator operation member is operated. Alternatively, the controller may perform processing to delay the timing of change of the transmission ratio toward the low-speed, when the braking device is activated and the accelerator operation member is operated.

The straddle-type vehicle may include, as the braking devices, a front braking device that applies a braking force to a front wheel and a rear braking device that applies a braking force to a rear wheel. Further, the controller may restrict the change of the transmission ratio toward the low-speed when the rear braking device is activated and the accelerator operation member is operated. According to the embodiment, the change of the transmission ratio toward the low-speed is restricted in a situation where the rear braking device is activated and the accelerator operation member is operated, i.e., the rider has no intention of speed reduction.

The straddle-type vehicle may include, as the braking devices, a front braking device that applies a braking force to a front wheel and a rear braking device that applies a braking force to a rear wheel. Further, when none of the front braking device and the rear braking device is activated and when the front braking device is not activated, but the rear braking device is activated, the normal processing unit may determine the timing of the change of the transmission ratio toward the low-speed according to the amount of operation of the accelerator operation member. When the rear braking device is activated and the accelerator operation member is operated, the controller may restrict the change of the transmission ratio toward the low-speed. According to the embodiment, the change of the transmission ratio toward the low-speed may be performed at the shift change time in normal traveling in a situation where the rider has an intention of gradual speed reduction, i.e., in a situation where only the rear braking device is activated. Further, in the embodiment, the controller may change the transmission ratio toward the low-speed at the time determined by the brake activation time processing unit when the front braking device is activated. According to the embodiment, in a situation where the rider has a strong intention of speed reduction, i.e., the front braking device is activated, the time to change the transmission ratio toward the low-speed may be made earlier than the time according to the amount of accelerator operation, and thus the engine brake may be used more effectively.

Deceleration of the vehicle may be used as the degree of activation of the braking device. Thereby, a sensor that directly senses the activation state of the braking device is not necessary, and the cost may be reduced.

### BRIEF DESCRIPTION OF THE DRAWINGS

Figs. 1A and 1B show an appearance of a motorcycle according to an embodiment.
Fig. 2 is a block diagram showing a configuration of the motorcycle.
Fig. 3 is a block diagram showing functions of a controller.
Figs. 4A and 4B show examples of shift position maps.
Figs. 5A to 5D are time charts showing a process in which a vehicle reduces its speed to a halt.
Fig. 6 is a diagram for explanation of another example of processing of the controller.
Fig. 7 is a flowchart showing an example of processing executed by the controller.
Fig. 8 is a flowchart showing another example of processing executed by the controller.
Fig. 9 is a flowchart showing another example of processing executed by the controller.

### DETAILED DESCRIPTION OF THE PREFERRED EMBODIMENTS

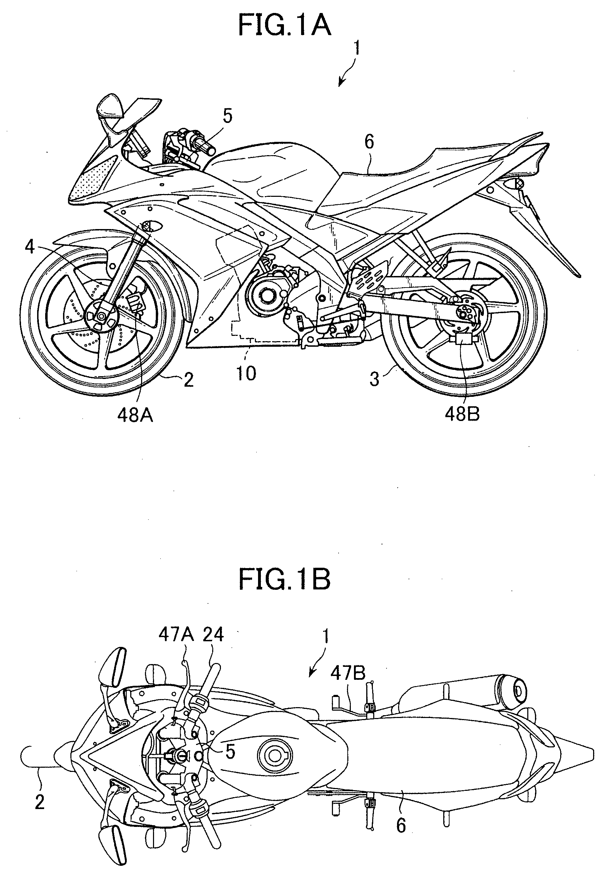

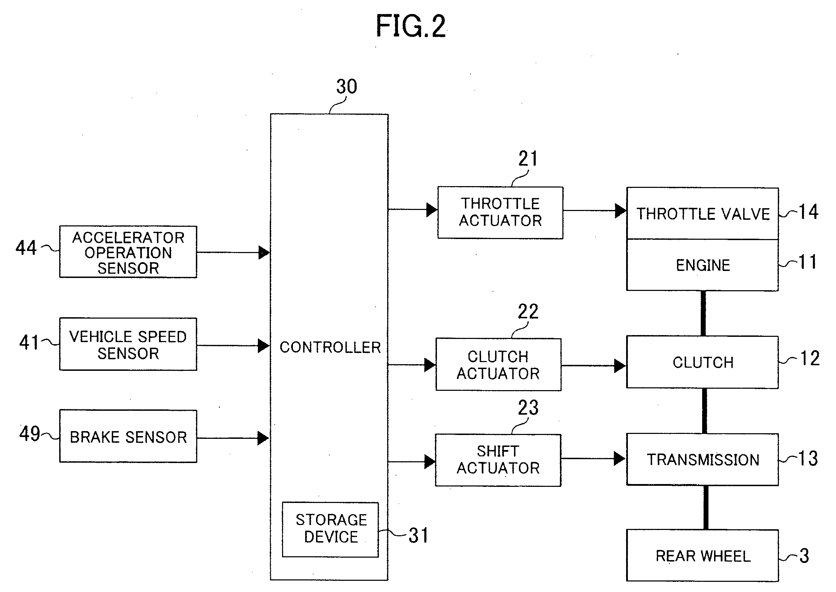

As below, an embodiment will be explained with reference to the drawings. Figs. 1A and 1B show an appearance of a motorcycle 1 which is an example of straddle-type vehicle of the embodiment. Fig. 1A is a side view and Fig. 1B is a plan view. Fig. 2 is a block diagram showing a configuration of the motorcycle 1. Alternatively, the straddle-type vehicle according to the present teaching may be a scooter-type motorcycle. Further, the straddle-type vehicle may be an all-terrain vehicle having 4 wheels or snowmobile.

As shown in Figs. 1A and 1B, the motorcycle 1 includes a front wheel 2. The front wheel 2 is supported at the lower end of a front fork 4. The front fork 4 is connected to a handle 5 through a steering shaft (not shown). The handle 5, the front fork 4, and the front wheel 2 are rotatable to right and left around the steering shaft. A seat 6 is provided at the rear of the handle 5.

The motorcycle 1 includes an engine unit 10 and a rear wheel 3 as a driving wheel. As shown in Fig. 2, the engine unit 10 includes an engine 11, a clutch 12, and a transmission 13. The engine 11 is provided with a throttle valve 14 that controls an amount of air to be supplied to the engine 11. The throttle valve 14 is provided within a throttle body placed in an intake path connected to the engine 11, for example. The opening of the throttle valve 14 (throttle opening) is controlled by an actuator 21.

As shown in Fig. 2, the clutch 12 and the transmission 13 are arranged in a power transmission path from the engine 11 to the rear wheel 3. The clutch 12 is set into a state of transmitting torque of the engine 11 to the transmission 13 (i.e. , an engagement state in which a drive member and a driven member of the clutch 12 are engaged) or a state of blocking torque transmission to the transmission 13 (a non-engagement state in which the drive member and the driven member are not engaged). Further, the clutch 12 is set into a state between the engagement state and the non-engagement state (a semi-engagement state) during shift change. In the semi-engagement state, the clutch 12 transmits torque depending on the degree of engagement between the engine 11 and the transmission 13. The motorcycle 1 has a clutch actuator 22 that operates the clutch 12 so that the power transmission state by the clutch 12 changes. The transmission 13 has a plurality of shift positions (that is transmission ratios, for example, 1st speed, 2nd speed and so on) and has transmission gears corresponding to the respective shift positions. The transmission 13 selectively engages the transmission gears to form the respective shift positions. The motorcycle 1 has a shift actuator 23 that operates the transmission 13 so that the shift position of the transmission 13 changes. The transmission 13 is not limited to that, but may alternatively be a continuously variable transmission, for example. When the transmission 13 is the continuously variable transmission, shift positions may be defined for the continuously variable transmission and a controller 30 to be described later may change the shift position (that is transmission ratio). Further, the controller 30 may continuously change the transmission ratio of the continuously variable transmission.

In the example in Fig. 2, the motorcycle 1 includes the clutch actuator 22 that operates the clutch 12 and the shift actuator 23 that operates the transmission 13. However, the clutch 12 and the transmission 13 may be operated by a common actuator. That is, one actuator may operate the transmission gear of the transmission 13 and the clutch 12. Further, two clutches may be provided in the motorcycle 1. Specifically, the motorcycle 1 may have two paths of power. The transmission 13 may have two input shafts arranged in the two paths respectively. Further, the two clutches may be respectively provided in one path from the engine 11 to one input shaft and the other path from the engine 11 to the other input shaft. Furthermore, in the case where the transmission 13 is a continuously variable transmission, the motorcycle 1 may include an automatic clutch (for example, a centrifugal clutch). In this case, the motorcycle 1 may not necessarily include the clutch actuator 22.

As shown in Fig. 2, the motorcycle 1 includes the controller 30 that controls the engine 11, the clutch 12, and the transmission 13. The controller 30 includes a microprocessor that executes processing relating to the control. Further, the controller 30 includes a storage device 31 employing a memory such as a ROM (Read Only Memory) or RAM (Random Access Memory). The storage device 31 has programs stored therein defining processing executed by the microprocessor and maps used during the processing. The controller 30 in the example automatically controls the shift position of the transmission 13 according to the operating state of the vehicle. The operating state is represented by a vehicle speed, an amount of operation of an accelerator grip 24, and deceleration (negative acceleration) of the vehicle. The control executed by the controller 30 will be explained later in detail.

As shown in Fig. 2, the motorcycle 1 has a vehicle speed sensor 41 for sensing a vehicle speed. The vehicle speed sensor 41 is provided on an axle of the front wheel 2, an output shaft of the transmission 13, or an axle of the rear wheel 3. The controller 30 calculates the vehicle speed and the acceleration of the vehicle based on an output signal of the vehicle speed sensor 41.

The motorcycle 1 includes the accelerator grip 24 for a rider to operate which is provided on the handle 5. As shown in Fig. 2, the motorcycle 1 includes an accelerator operation sensor 44 for sensing the amount of operation of the accelerator grip 24 (hereinafter, referred to as "amount of accelerator operation"). The accelerator operation sensor 44 outputs a signal in response to the amount of accelerator operation to the controller 30. The controller 30 activates the throttle actuator 21 according to the amount of accelerator operation sensed by the accelerator operation sensor 44 to control the throttle valve 14. The controller 30 increases the throttle opening as the amount of accelerator operation increases. The controller 30 sets the throttle opening to the minimum (0%) when the amount of accelerator operation is 0%. At that time, the torque output by the engine is negative, and an engine brake is obtained.

As shown in Figs. 1A and 1B, the motorcycle 1 has a front braking device 48A that applies a braking force to the front wheel 2 and a rear braking device 48B that applies a braking force to the rear wheel 3. Further, the motorcycle 1 has a front brake operation member 47A and a rear brake operation member 47B operated by the rider to respectively activate the braking devices 48A, 48B. The brake operation member 47A is a brake lever for a rider to operate by hand, provided at the same side (at the right side in Fig. 1B) as that of the accelerator grip 24 on the handle 5, for example. The brake operation member 47B is a brake pedal for a rider to operate by foot, provided in the lower part of the vehicle body (see Fig. 1B). Alternatively, the brake operation member 47B may be a brake lever that the rider can operate by hand, provided at the opposite side to that of the accelerator grip 24 and the front brake operation member 47B.

In the motorcycle in which the brake operation members and the accelerator grip are provided as described above, the rear brake operation member and the accelerator grip may be operated at the same time. Accordingly, the rider may perform brake operation for a purpose different from speed reduction while maintaining the intention of acceleration. The motorcycle turns with the vehicle body tilted unlike a four-wheel motorcar. Therefore, for example, when a U-turn (reversal of the traveling direction) is performed, the rear brake operation member may be operated while the amount of accelerator operation is maintained or increased to control the tilted posture of the vehicle body during turn. As will be explained later in detail, the controller 30 of the embodiment restricts the execution of shift down when the brake operation is performed. Alternatively, the brake operation member 47A may be adapted so that both the front braking device 48A and the rear braking device 48B may be activated by the operation of the brake operation member 47A. Similarly, the brake operation member 47B may be adapted so that both the front braking device 48A and the rear braking device 48B may be activated by the operation of the brake operation member 47B.

As shown in Fig. 2, the motorcycle 1 includes a brake sensor 49. The brake sensor 49 of the example is a switch that outputs an on-signal when one of the brake operation members 47A, 47B is operated. That is, the brake sensor 49 is a switch that outputs an on-signal in either case where only the front brake operation member 47A is operated or the rear brake operation member 47B is operated.

The motorcycle 1 may have a brake sensor for the rear wheel 3 and a brake sensor for the front wheel 2. In this case, the respective brake sensors are switches that respectively output signals (on/off-signals) in response to whether or not the corresponding brake operation members 47A, 47B are operated. Further, the respective brake sensors may be sensors that output signals representing the amounts of operation of the corresponding brake operation members 47A, 47B. Furthermore, the respective brake sensors may be sensors that output signals representing activation hydraulic pressure of the corresponding braking devices 48A, 48B.

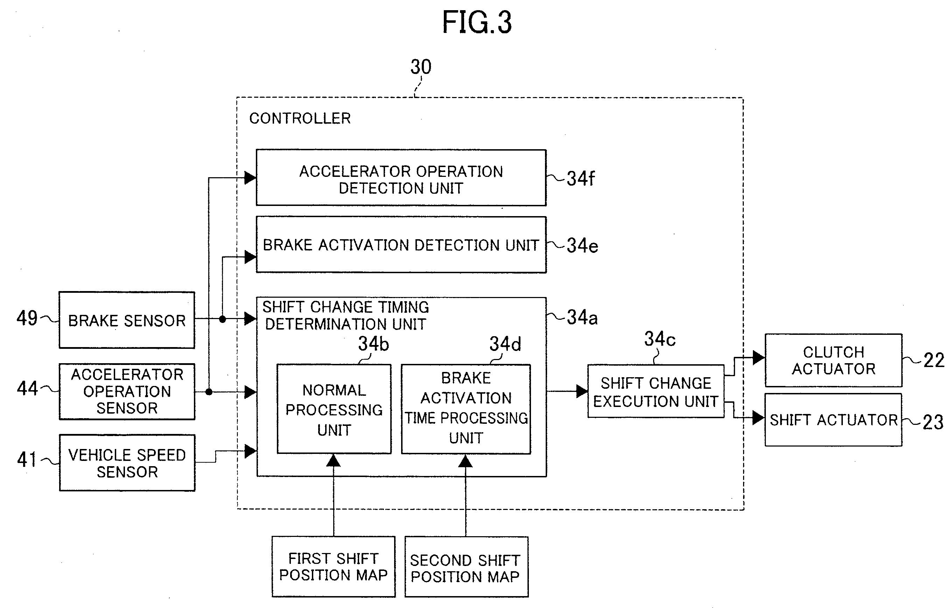

Fig. 3 is a block diagram showing functions of the controller 30. As shown in the same drawing, the controller 30 includes a shift change timing determination unit 34a, a brake activation detection unit 34e, an accelerator operation detection unit 34f, and a shift change execution unit 34c as the functions. The functions of the respective units are realized by processing defined by programs stored in the storage device 31.

The shift change timing determination unit 34a determines whether or not a time of shift change (that is, a time of change of transmission ratio) has come, according to the operating state of the vehicle sensed by the sensor. The shift change timing determination unit 34a has a normal processing unit 34b that determines whether or not the time to execute shift change has come, i.e., whether or not the time to execute shift up and shift down has come, according to the vehicle speed and the amount of accelerator operation sensed by the sensors 41, 44. In this specification, "Shift up" means a change of the transmission ratio (shift position) toward the top-speed (for example, 5th speed or 6th speed), and "Shift down" means a change of the transmission ratio (shift position) toward the low-speed (that is, 1st speed). The shift change timing determination unit 34a includes a brake activation time processing unit 34d that determines whether or not the time to change the transmission ratio toward the low-speed has come, i.e. , whether or not the time to execute shift down has come, according to the degrees of activation of the braking devices 48A, 48B. The brake activation detection unit 34e detects whether or not the braking devices 48A, 48B are activated. Then, the shift change timing determination unit 34a selects one of the processing of the normal processing unit 34b and the processing of the brake activation time processing unit 34d, based on the detection result of the brake activation detection unit 34e. In one example, the shift change timing determination unit 34a selects the brake activation time processing unit 34d when one of the front braking device 48A and the rear braking device 48B is activated, and selects the normal processing unit 34b when none of the braking devices 48A, 48B is activated.

According to the brake activation time processing unit 34d, shift down may be executed at the time depending on the degrees of activation of the braking devices 48A, 48B when the braking devices 48A, 48B are activated. As a result, when the braking devices 48A, 48B are activated, shift down can be performed at the time earlier than the time according to the amount of accelerator operation. That is, when the braking devices 48A, 48B are activated, shift down can be performed at the vehicle speed higher than the vehicle speed obtained according to the amount of accelerator operation. As a result, the engine brake may be used more effectively.

The accelerator operation detection unit 34f detects whether or not the accelerator grip 24 is operated. When the braking devices 48A, 48B are activated and the accelerator grip 24 is operated, the controller 30 restricts the execution of shift down at the timing determined by the processing of the brake activation time processing unit 34d. As a result, when the braking devices 48A, 48B are activated, but the rider has no intention of speed reduction, the controller 30 restricts shift down at the timing determined based on the degrees of activation of the braking devices 48A, 48B. Thereby, when the rider performs brake operation for reducing the speed of the vehicle, shift down is executed at the earlier time and thus the engine brake may be used more effectively. On the other hand, when the braking operation by the rider does not intend to reduce the speed, shift down at the early time is restricted and larger engine brake may be suppressed from being generated.

The accelerator grip 24 and the brake operation member 47A for the front wheel 2 are provided on the same side of the handle 5 (on the right side in this example). Accordingly, it is difficult for the rider to operate the accelerator grip 24 and the brake operation member 47A for the front wheel 2 at the same time. Therefore, the case where an activation of the braking devices 48A or 48B are detected and an operation of the accelerator grip 24 is operated can be considered as a case where only the rear braking device 48B of the two braking devices 48A, 48B is activated and the accelerator grip 24 is operated. Therefore, the controller 30 restricts shift down at the timing determined by the brake activation time processing unit 34d when the rear braking device 48B is activated and the accelerator grip 24 is operated. As a result, when a U-turn (reversal of the traveling direction) of the vehicle is executed by activation of the rear braking device 48B while the accelerator operation is maintained, for example, the shift down is restrained from being made earlier than normal situation. As below, the processing of the respective units of the controller 30 will be explained in detail.

The brake sensor 49 of this example is a switch that output an on-signal when one of the brake operation members 47A, 47B is operated. The brake activation detection unit 34e detects whether or not one of the front braking device 48A and the rear braking device 48B is activated, based on the output signal of the sensor 49. The motorcycle 1 may be provided with a brake sensor for the rear wheel 3 and a brake sensor for the front wheel 2 in place of the brake sensor 49. In this case, the brake activation detection unit 34e may detect whether or not one of the front braking device 48A and the rear braking device 48B is activated based on the output signals of the two sensors. As described above, the shift change timing determination unit 34a of the example selects the brake activation time processing unit 34d when one of the front braking device 48A and the rear braking device 48B is activated, and selects the normal processing unit 34b when none of the braking devices 48A, 48B is activated.

The normal processing unit 34b determines the timing of the change of the transmission ratio toward the low-speed, i.e., the time when shift down is executed, according to the vehicle speed and the amount of accelerator operation sensed by the sensors 41, 44. Further, the normal processing unit 34b determines the timing of the change of the transmission ratio toward top-speed, i.e., the time when shift up is executed, according to the vehicle speed and the amount of accelerator operation sensed by the sensors 41, 44. The normal processing unit 34b generates a shift change command when the time of a shift change comes. The shift change command indicates the shift position to be set next, for example, from 2nd speed to 3rd speed or from 3rd speed to 2nd speed.

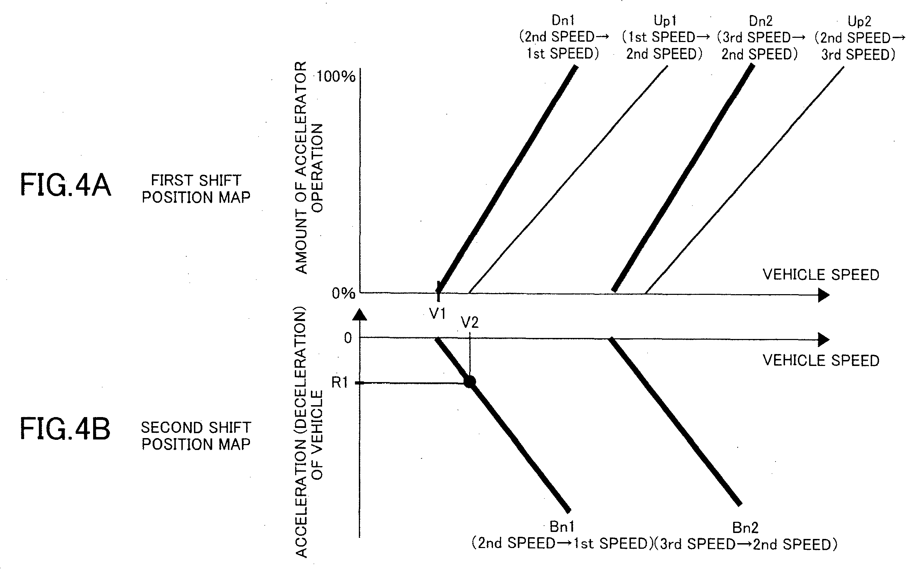

The processing by the normal processing unit 34b is executed in the following manner. For example, the storage device 31 has a map (hereinafter, referred to as "first shift position map") stored therein which defines the operation points (represented by vehicle speed and amount of accelerator operation) at which a shift change is to be executed. Further, the operation point at which shift change is to be executed will be referred to as "shift change point". Fig. 4A shows an example of the first shift position map. In the same drawing, the horizontal axis indicates the vehicle speed and the vertical axis indicates the amount of accelerator operation. The first shift position map has a plurality of shift-down lines defined therein which represent the shift change points of shift down. In the drawing, as examples, a shift-down line Dn1 (from 2nd speed to 1st speed) and a shift-down line Dn2 (from 3rd speed to 2nd speed) are shown. Further, the first shift position map has a plurality of shift-up lines defined therein which represent the shift change points of shift up. In the drawing, as examples, a shift-up line Un1 (from 1st speed to 2nd speed) and a shift-up line Un2 (from 2nd speed to 3rd speed) are shown. In the example shown in the drawing, the respective lines are specified so that the vehicle speed at which shift change is to be executed (hereinafter, referred to as "shift change vehicle speed") becomes higher as the amount of accelerator operation at the shift change point (the amount of shift change accelerator operation) is larger. The normal processing unit 34b refers to the first shift position map and determines whether or not the current operation point (vehicle speed, amount of accelerator operation) has reached a shift change point of shift down. Further, the normal processing unit 34b determines whether or not the current operation point has reached a shift change point of shift up. The normal processing unit 34b generates a shift change command corresponding to the shift change point when determining that the current operation point has reached the shift change point. Then the shift change execution unit 34c executes shift change indicated by the generated shift change command.

As described above, the brake activation time processing unit 34d determines the timing of the change of the transmission ratio toward the low-speed, i.e., the time when shift down is executed, according to the degrees of activation of the braking devices 48A, 48B. The brake activation time processing unit 34d generates a shift change command when the time of shift down comes. The brake activation time processing unit 34d determines the time of shift down when one of the braking devices 48A, 48B is activated, as described above.

Negative acceleration (deceleration) of the vehicle is used in the processing as the degrees of activation of the braking devices 48A, 48B, for example. When sensors that output signals representing the amounts of operation of the brake operation members 47A, 47B are provided, the degrees of activation of the braking devices 48A, 48B may be the amounts of operation of the brake operation members 47A, 47B. When sensors that output signals representing the respective activation hydraulic pressure of the braking devices 48A, 48B are provided, the activation hydraulic pressure of the braking devices 48A, 48B is used as the degrees of activation of the braking devices 48A, 48B.

The processing of the brake activation time processing unit 34d is executed in the following manner, for example. The storage device 31 has a map stored therein which defines the operation points (vehicle speeds, degrees of activation of braking devices) at which shift down is to be executed (hereinafter, this map is referred to as "second shift position map"). Fig. 4B shows an example of the second shift position map. The horizontal axis in the drawing indicates the vehicle speed. The vertical axis indicates the deceleration of the vehicle as the degree of the activation of the braking device. The second shift position map has a plurality of shift-down lines defining the shift change points of shift down. In the drawing, as examples, a shift-down line Bn1 (from 2nd speed to 1st speed) and a shift-down line Bn2 (from 3rd speed to 2nd speed) are shown. The shift-down lines are defined so that the vehicle speed at which shift change is to be executed becomes higher as the deceleration is larger. The brake activation time processing unit 34d refers to the second shift position map and then determines whether or not the current operation point has reached a shift change point of shift down. The brake activation time processing unit 34d generates a shift change command corresponding to the shift change point when determining that the current operation point has reached the shift change point. The shift change execution unit 34c executes shift change indicated by the generated shift change command.

The second shift position map is set so that the time when shift down is executed is earlier than that of the first shift position map. That is, the second shift position map is set so that the shift change vehicle speed obtained from second shift position map is higher than that obtained from the first shift position map. The explanation will be made with reference to Figs. 4A and 4B. For example, when the amount of accelerator operation is 0%, with reference to the first shift position map in Fig. 4A, the shift change vehicle speed of shift down is specified by the shift-down line Dn1 (from 2nd speed to 1st speed) to be the vehicle speed V1. In Fig. 4B, the deceleration R1 is deceleration with 0% of the amount of accelerator operation. When the deceleration is R1, with reference to the second shift position map, the shift change vehicle speed of shift down specified by the shift-down line Bn1 (from 2nd speed to 1st speed) is the vehicle speed V2 higher than the vehicle speed V1. Specifically, the shift change vehicle speed of shift down obtained from the second shift position map is higher than the shift change vehicle speed of shift down obtained from the first shift position map when the amount of accelerator operation is 0%. That is, the processing of the brake activation time processing unit 34d is for executing shift down at the higher vehicle speed than the vehicle speed at which shift down is performed by the processing of the normal processing unit 34b.

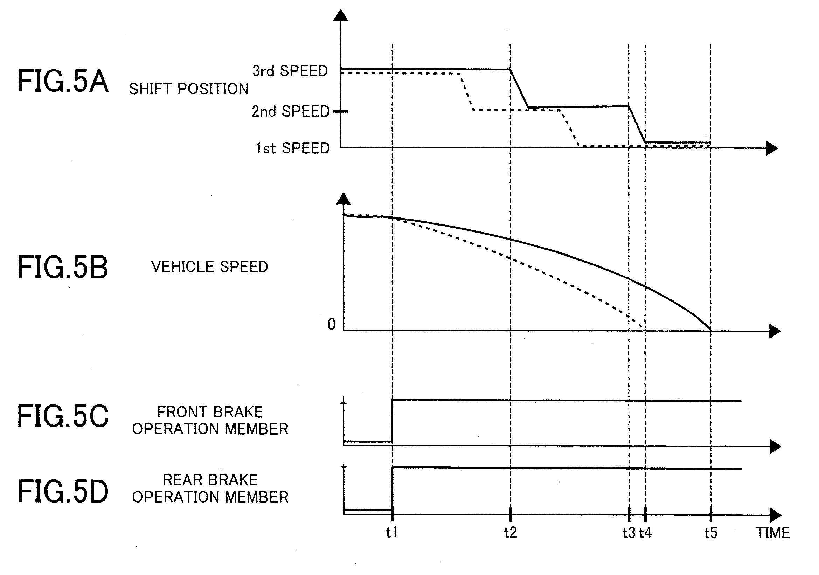

According to the processing of the brake activation time processing unit 34d, the engine brake can be used more effectively and, as a result, the braking time of the vehicle may be shortened. Figs. 5A to 5D are time charts showing a situation in which the amount of accelerator operation is set to 0% and thus the vehicle reduces its speed. Fig. 5A shows the change of the shift position, Fig. 5B shows the change of the vehicle speed, Fig. 5C shows the operating state of the front brake operation member 47A, and Fig. 5D shows the operating state of the rear brake operation member 47B. In Figs. 5A and 5B, solid lines show the changes when the first shift position map is used and broken lines show the changes when the second shift position map is used.

When the front brake operation member 47A and the rear brake operation member 47B are operated at t1, the vehicle starts to reduce the speed due to the braking force of the braking devices 48A, 48B. When the first shift position map in Fig. 4A is used, the operation point sequentially reaches the shift change points of the shift-down lines Dn2, Dn1 due to speed reduction of the vehicle. As a result, shift down from 3rd speed to 2nd speed is executed at t2, and then shift down from 2nd speed to 1st speed is executed at t3. After that, the vehicle stops at t5. On the other hand, when the second shift position map in Fig. 4B is used, the operation point sequentially reaches the shift change points of the shift-down lines Bn2, Bn1 due to speed reduction of the vehicle. As described above, the shift change vehicle speed of shift down obtained from the second shift position map is higher than the shift change vehicle speed of shift down obtained from the first shift position map. Accordingly, when the second shift position map is used, as shown by the broken line in Fig. 5A, shift down from 3rd speed to 2nd speed is executed at the time earlier than t2, and shift down from 2nd speed to 1st speed is executed at the time earlier than t3. Further, when the amount of accelerator operation is 0%, decelerating force (negative driving force) acts on the rear wheel 3 due to the engine brake. The decelerating force on the rear wheel 3 is larger as the shift position is lower (closer to 1st speed). Accordingly, as shown by the broken line in Fig. 5B, when the second shift position map is used, compared to the case where the first shift position map is used, the vehicle speed is lower at the earlier time and the vehicle stops at t4 earlier than t5.

The processing of the brake activation time processing unit 34d is not limited to that using the above described second shift position map. For example, the brake activation time processing unit 34d may perform correction of shifting the shift-down line of the first shift position map toward higher speed by an amount depending on the degrees of the activation of the braking devices 48A, 48B. Then, the brake activation time processing unit 34d may determine whether or not the operation point (vehicle speed, amount of accelerator operation) has reached the shift change point specified by the corrected shift-down line. In this manner, shift down is executed at the higher vehicle speed than the vehicle speed at which shift down is performed by the processing of the normal processing unit 34b.

Further, the brake activation time processing unit 34d may perform correction on the vehicle speed sensed by the vehicle speed sensor 41 and use the first shift position map according to the corrected vehicle speed. That is, the brake activation time processing unit 34d subtracts the value depending on the degrees of activation of the braking devices 48A, 48B from the vehicle speed sensed by the vehicle speed sensor 41. Then, the brake activation time processing unit 34d may determine whether or not the corrected operation point (corrected vehicle speed, amount of accelerator operation) has reached the shift change point specified by the shift-down line of the first shift position map.

When a shift change command is generated by the normal processing unit 34b or the brake activation time processing unit 34d, the shift change execution unit 34c executes shift change corresponding to the shift change command. Specifically, the shift change execution unit 34c uses the clutch actuator 22 and the shift actuator 23 to operate the clutch 12 and the transmission gear of the transmission 13 in a predetermined procedure, and thereby, executes shift change. For example, the shift change execution unit 34c first sets the clutch 12 in the non-engagement state. Then, the shift change execution unit 34c changes the current shift position to the next shift position designated by the shift change command through shift of the transmission gear and engagement of the transmission gear. Finally, the shift change execution unit 34c returns the clutch 12 into the engagement state and ends shift change.

The accelerator operation detection unit 34f detects whether or not the accelerator grip 24 is operated based on the output signal of the accelerator operation sensor 44. Specifically, the accelerator operation detection unit 34f determines whether or not the amount of accelerator operation sensed by the accelerator operation sensor 44 exceeds a preset threshold value, and determines that the accelerator grip 24 is operated when the amount of accelerator operation exceeds the threshold value. As described above, the controller 30 controls the throttle valve 14 so that the throttle opening may be larger as the amount of accelerator operation is larger. Therefore, the accelerator operation detection unit 34f may determine that the accelerator grip 24 is operated when the throttle opening is larger than a threshold value.

When the detection that the braking devices 48A, 48B are activated is made by the accelerator operation detection unit 34f and the detection that the accelerator grip 24 is operated is made by the brake activation detection unit 34e, the controller 30 restricts the shift down at the time determined by the brake activation time processing unit 34d, i.e., shift down at the time obtained with reference to the second shift position map. As described above, it is difficult to operate the accelerator grip 24 and the brake operation member 47A for the front wheel 2 at the same time. Therefore, when the rear braking device 48B of the two braking devices 48A and 48B is activated and the accelerator grip 24 is operated, the controller 30 restricts the shift down at the time determined by the brake activation time processing unit 34d.

Various methods can be applied to the restriction of shift down. In the first example, when the braking devices 48A, 48B are activated and the accelerator grip 24 is operated, the controller 30 prohibits execution of shift down. That is, the controller 30 prohibits not only shift down at the time obtained with reference to the second shift position map but also shift change (including shift down and shift up) at the time obtained with reference to the first shift position map (that is, time determined by the amount of accelerator operation and the vehicle speed referring to the first shift position map). Note that, when a U-turn of the vehicle is executed by activation of the rear braking device 48B while the accelerator operation is maintained, shift down is preferably prohibited.

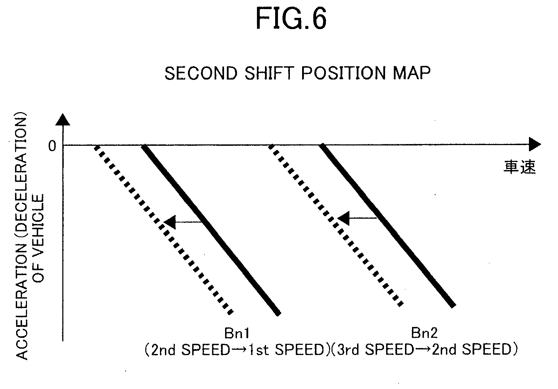

In the second example, when the braking devices 48A, 48B are activated and the accelerator grip 24 is operated, the controller 30 may not prohibit shift down, but may execute processing of delaying the time of shift down. That is, the controller 30 may lower the vehicle speed at which shift down is executed (i.e. , shift change vehicle speed). For example, the controller 30 may lower the shift change vehicle speed from the shift change vehicle speed of shift down obtained with reference to the second shift position map. Fig. 6 is a diagram for explanation of the processing of the controller 30. As the solid lines in the drawing, the shift-down lines Bn1, Bn2 specified by the second shift position map shown in Fig. 4B are shown as examples. As shown in Fig. 6, when the braking devices 48A, 48B are activated and the accelerator grip 24 is operated, the controller 30 performs correction of shifting the shift-down lines of the second shift position map toward lower speed. In this case, the shift change timing determination unit 34a determines whether or not the operation point (vehicle speed, deceleration of the vehicle) has reached the shift change point specified by the corrected shift-down line. In this manner, shift down is executed at the lower vehicle speed than the vehicle speed at which shift down is performed by the processing of the brake activation time processing unit 34d, and thus the timing of shift down can be delayed.

Further, when the braking devices 48A, 48B are activated and the accelerator grip 24 is operated, the controller 30 may perform correction on the vehicle speed sensed by the vehicle speed sensor 41. Specifically, the controller 30 adds a predetermined value to the vehicle speed sensed by the vehicle speed sensor 41. The shift change timing determination unit 34a determines whether or not the corrected operation point (corrected vehicle speed, amount of accelerator operation) has reached the shift change point specified by the shift-down line of the first shift position map or whether or not the corrected operation point has reached the shift change point specified by the shift-down line of the second shift position map. In this manner, shift down is executed at the lower vehicle speed than the vehicle speed at which shift down is performed by the processing of the normal processing unit 34b and the brake activation time processing unit 34d.

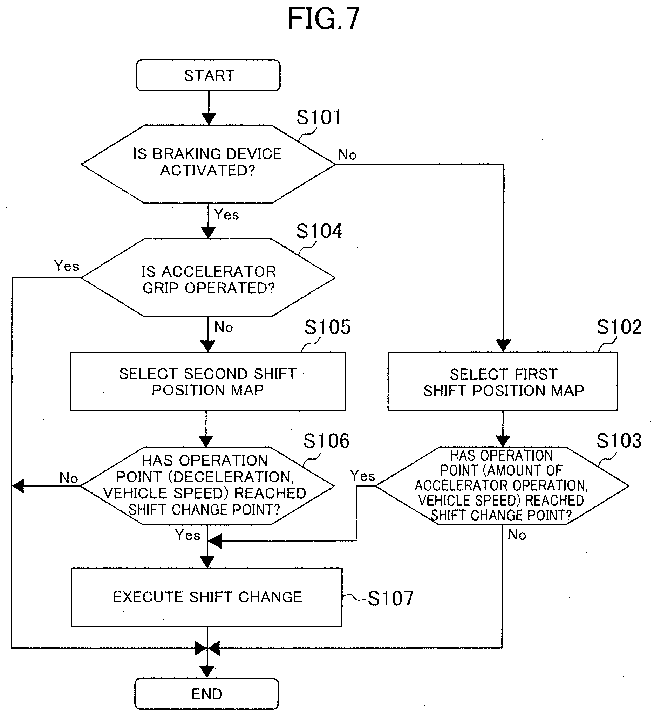

Fig. 7 is a flowchart showing an example of processing executed by the controller 30. The processing shown in the drawing is repeatedly executed with a predetermined period during traveling of the vehicle.

First, the brake activation detection unit 34e detects whether or not the braking devices 48A, 48B are activated based on the output signal of the brake sensor 49 (S101). The brake sensor 49 of the example is a sensor that output an on-signal when one of the brake operation members 47A, 47B is operated, and thus whether or not one of the braking devices 48A, 48B is activated is detected at S101. If none of the braking devices 48A, 48B is activated, the shift change timing determination unit 34a selects the normal processing unit 34b (S102). The normal processing unit 34b determines whether or not the current operation point (vehicle speed, amount of accelerator operation) has reached a shift change point defined by the first shift position map (S103). If the operation point has reached the shift change point, the normal processing unit 34b generates a shift change command corresponding to the shift change point and the shift change execution unit 34c executes shift change corresponding to the shift change command (S107). On the other hand, if the operation point has not reached the shift change point, the controller 30 ends the present processing.

If the braking devices 48A, 48B are activated at S101, i.e. , one of the braking devices 48A, 48B is activated, the accelerator operation detection unit 34f detects whether or not the accelerator grip 24 is operated (S104). If the accelerator grip 24 is not operated, the shift change timing determination unit 34a selects the brake activation time processing unit 34d (S105), and then the brake activation time processing unit 34d determines whether or not the current operation point (vehicle speed, deceleration) has reached a shift change point of shift down specified by the second shift position map (S106). If the operation point has reached the shift change point, the brake activation time processing unit 34d generates a shift change command corresponding to the shift change point and the shift change execution unit 34c executes shift change corresponding to the shift change command (S107). If the operation point has not reached the shift change point, the controller 30 ends the present processing.

If the accelerator grip 24 is operated at S102, shift change (shift down) is prohibited and the controller 30 ends the present processing without performing the processing at S105 to S107.

The invention is not limited to the motorcycle 1 that has been explained as above, various changes may be made thereto.

For example, the motorcycle 1 may be provided with a brake sensor for the rear wheel 3 and a sensor for the front wheel 2 in place of the brake sensor 49. In this case, the brake activation detection unit 34e detects whether or not the front braking device 48A is activated and whether or not the rear braking device 48B is activated based on the output signals of the two sensors. For example, when the two sensors are sensors that respectively output signals representing the amounts of operation of the brake operation members 47A, 47B, the brake activation detection unit 34e determines whether or not the amounts of operation exceed preset threshold values. Further, when the two sensors are sensors that respectively output signals representing the activation hydraulic pressure of the braking devices 48A, 48B, the brake activation detection unit 34e determines whether or not the activation hydraulic pressure exceeds preset threshold values.

When only the front braking device 48A of the two braking devices 48A, 48B is activated and when both of the braking devices 48A, 48B are activated, the shift change timing determination unit 34a selects the brake activation time processing unit 34d. That is, the shift change timing determination unit 34a selects the brake activation time processing unit 34d when the front braking device 48A is activated. When having an intention to reduce the speed of the vehicle, the rider often uses the front braking device 48A or both of the braking devices 48A, 48B. Accordingly, the brake activation time processing unit 34d is selected at activation of the front braking device 48A, and thereby, when the rider has a strong intention of speed reduction, the engine brake can be effectively used. On the other hand, when the rear braking device 48B is activated, but the front braking device 48A is not activated, the intention of speed reduction of the rider is not assumed to be strong. Therefore, the shift change timing determination unit 34a may select the normal processing unit 34b not only when none of the braking devices 48A, 48B is activated but also when the rear braking device 48B is activated, but the front braking device 48A is not activated. That is, the shift change timing determination unit 34a may select the normal processing unit 34b when the front braking device 48A is not activated. The controller 30 restricts shift change (shift up and shift down) when the rear braking device 48B is activated and the accelerator grip 24 is operated. That is, when only the rear braking device 48B of the two braking devices 48A and 48B is activated, shift down at the time determined by the brake activation time processing unit 34d is restricted and shift down at the time determined by the normal processing unit 34b is executed. Further, when the rear braking device 48B is activated and the accelerator grip 24 is operated, shift down itself is restricted.

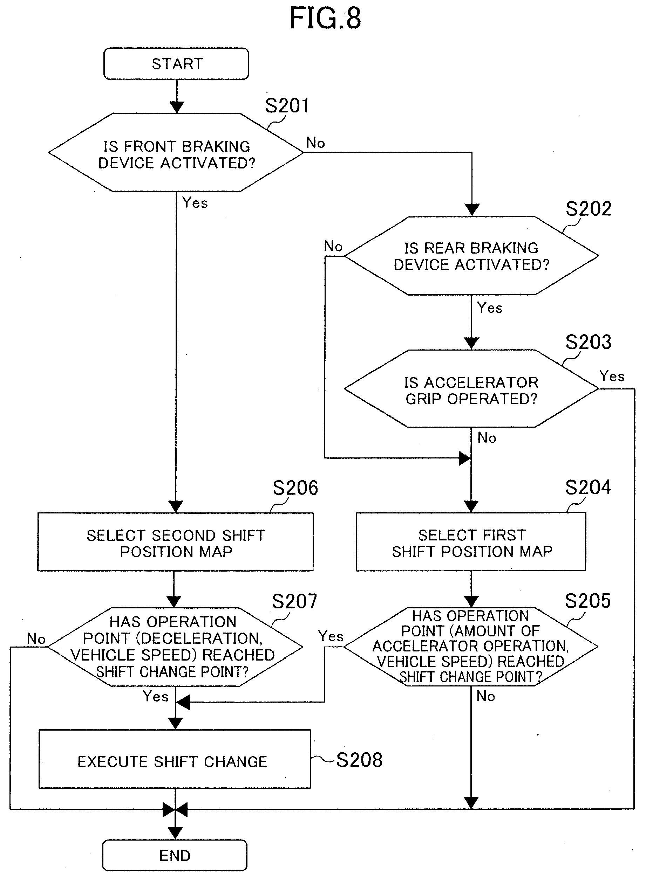

Fig. 8 is a flowchart showing an example of processing executed by the controller 30 in the above described example in which a brake sensor is provided with respect to each of the two braking devices 48A, 48B. The processing shown in the drawing is repeatedly executed with a predetermined period during traveling of the vehicle.

First, the brake activation detection unit 34e detects whether or not the front braking device 48A is activated (S201). If the front braking device 48A is not activated, the brake activation detection unit 34e detects whether or not the rear braking device 48B is activated (S202). If the detection that none of the braking devices 48A, 48B is activated is made through the processing at S201 and S202, the shift change timing determination unit 34a selects the normal processing unit 34b (S204). Further, when the detection that the front braking device 48A is not activated is made at S201 and the detection that the rear braking device 48B is activated is made at S202, the accelerator operation detection unit 34f detects whether or not the accelerator grip 24 is operated (S203). If the accelerator grip 24 is not operated, the shift change timing determination unit 34a selects the normal processing unit 34b (S204). The normal processing unit 34b selected at S204 determines whether or not the current operation point (vehicle speed, amount of accelerator operation) has reached a shift change point specified by the first shift position map (S205). If the operation point has reached the shift change point, the normal processing unit 34b generates a shift change command corresponding to the shift change point and the shift change execution unit 34c executes shift change corresponding to the shift change command (S208). On the other hand, if the operation point has not reached the shift change point, the controller 30 ends the present processing. If the rear braking device 48B is activated at S202 and the accelerator grip 24 is operated at S203, shift change is prohibited and the controller 30 ends the present processing.

If the front braking device 48A is activated at S201, the shift change timing determination unit 34a selects the brake activation time processing unit 34d (S206). The brake activation time processing unit 34d determines whether or not the current operation point (vehicle speed, deceleration) has reached a shift change point of shift down defined by the second shift position map (S207). If the operation point has reached the shift change point, the brake activation time processing unit 34d generates a shift change command corresponding to the shift change point and the shift change execution unit 34c executes shift change corresponding to the shift change command (S208). If the operation point has not reached the shift change point, the controller 30 ends the present processing.

According to the processing in Fig. 8, when the rider has a strong intention of speed reduction, i.e., when the front brake operation member 47A is operated, shift down using the second shift position map is executed. When the intention of speed reduction of the rider is not strong, i.e., when the rear brake operation member 47B is operated, but the front brake operation member 47A is not operated, shift down using the first shift position map is executed. When both the rear brake operation member 47B and the accelerator grip 24 are operated, i.e., when the rider performs braking operation for the purpose different from speed reduction, shift up and shift down are prohibited.

The transmission 13 may be a continuously variable transmission. In this case, the brake activation time processing unit 34d corrects the shift position map so that the timing of the change of the transmission ratio toward the low-speed may become earlier, for example. Further, when the braking devices 48A, 48B are activated and the accelerator grip 24 is operated, the controller 30 may restrict the processing of the brake activation time processing unit 34d. Furthermore, when the braking devices 48A, 48B are activated and the accelerator grip 24 is operated, the controller 30 may restrict the change of the transmission ratio.

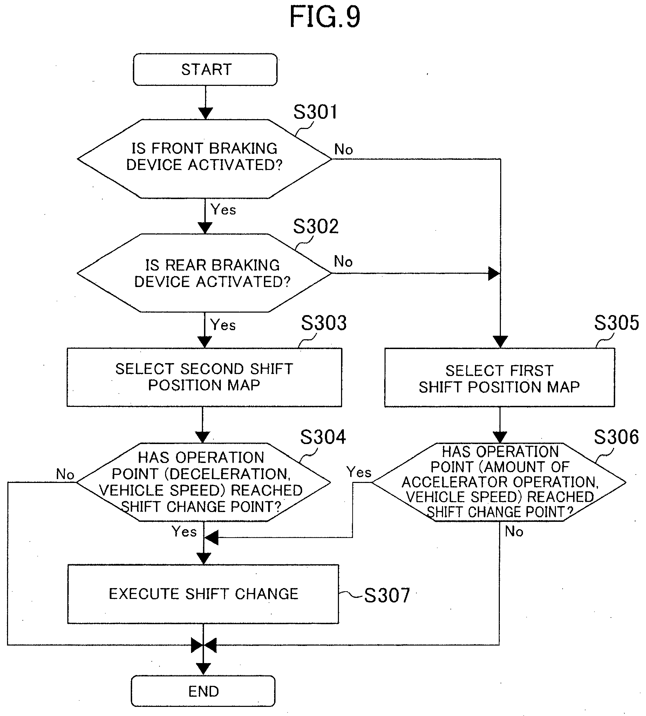

Fig. 9 is a flowchart showing processing according to a reference example of the present teaching. The processing shown in the drawing is repeatedly executed with a predetermined period during traveling of the vehicle. In this example, if both the rear braking device 48B and the front braking device 48A are activated, shift down using the second shift position map is executed, if none of the rear braking device 48B and the front braking device 48A is activated and if one of the braking devices 48A, 48B is not activated, shift down using the first shift position map is executed. Further, in the example explained here, a brake sensor is provided with respect to each of the front brake operation member 47A and the rear brake operation member 47B.

First, the brake activation detection unit 34e detects whether or not the front brake operation member 47A is operated, i.e., whether or not the front braking device 48A is activated (S301). If the front braking device 48A is activated, the controller 30 further detects whether or not the rear braking device 48B is activated, i.e., whether or not the rear brake operation member 47B is operated (S302). If both of the braking devices 48A, 48B are activated, the shift change timing determination unit 34a selects the brake activation time processing unit 34d (S303). The brake activation time processing unit 34d determines whether or not the current operation point (vehicle speed, deceleration) has reached a shift change point of shift down specified by the second shift position map (S304). If the operation point has reached the shift change point, the brake activation time processing unit 34d generates a shift change command corresponding to the shift change point and the shift change execution unit 34c executes shift change corresponding to the shift change command (S307). If the operation point has not reached the shift change point, the controller 30 ends the present processing.

If the front braking device 48A is not activated at S301 or the rear braking device 48B is not activated at S302, the shift change timing determination unit 34a selects the normal processing unit 34b (S305). Then, the normal processing unit 34b determines whether or not the current operation point (vehicle speed, amount of accelerator operation) has reached a shift change point defined by the first shift position map (S306). If the operation point has reached the shift change point, the normal processing unit 34b generates a shift change command corresponding to the shift change point and then the shift change execution unit 34c executes shift change corresponding to the shift change command (S307). On the other hand, if the operation point has not reached the shift change point, the controller 30 ends the present processing.

## Claims

1. A straddle-type vehicle comprising:
a transmission (13);
an actuator (23) adapted to operate the transmission (13) to change a transmission ratio thereof;
a controller (30) adapted to control the transmission ratio of the transmission (13) by means of the actuator (23);
a braking device (48A, 48B) adapted to apply a braking force to the vehicle; and
an accelerator operation member for a rider to operate,
wherein the controller (30) includes
a normal processing unit (34b) adapted to determine the timing of change of the transmission ratio toward a low-speed according to an amount of operation of the accelerator operation member, and **characterised in that**
a brake activation time processing unit (34d) adapted to determine the timing of change of the transmission ratio toward the low-speed when the braking device (48A, 48B0) is activated, where the timing is determined according to a degree of activation of the braking device (48A, 48B), and
the controller (30) is adapted to restrict the change of the transmission ratio toward the low-speed the timing of which is determined by the brake activation time processing unit (34d), when the braking device (48A, 48B) is activated and the accelerator operation member is operated.

2. A straddle-type vehicle according to claim 1, wherein the controller (30) prohibits the change of the transmission ratio toward the low-speed when the braking device (48A, 48B) is activated and the accelerator operation member is operated.

3. A straddle-type vehicle according to claim 1, wherein the controller (30) performs processing to delay the timing of change of the transmission ratio toward the low-speed, when the braking device (48A, 48B) is activated and the accelerator operation member is operated.

4. A straddle-type vehicle according to any one of claims 1 to 3, further comprising, as the braking devices, a front braking device (48A) that applies a braking force to a front wheel (2) and a rear braking device (48B) that applies a braking force to a rear wheel (3),
wherein the controller (30) restricts the change of the transmission ratio toward the low-speed when the rear braking device (48B) is activated and the accelerator operation member is operated.

5. A straddle-type vehicle according to any one of claims 1 to 4, further comprising, as the braking devices (48A, 48B), a front braking device (48A) that applies a braking force to a front wheel (2) and a rear braking device (48B) that applies a braking force to a rear wheel (3),
wherein the normal processing unit (34b) determines the timing of the change of the transmission ratio toward the low-speed according to the amount of operation of the accelerator operation member when none of the front braking device (48A) and the rear braking device (48B) is activated and when the front braking (48A) device is not activated, but the rear braking device (48B) is activated, and
the controller (30) restricts the change of the transmission ratio toward the low-speed when the rear braking device (48B) is activated and the accelerator operation member is operated.

6. A straddle-type vehicle according to claim 5, wherein the controller (30) executes the processing of the brake activation time processing unit (34d) when the front braking device (48A) is activated.

7. A straddle-type vehicle according to any one of claims 1 to 6, wherein deceleration of the vehicle is used as the degree of activation of the braking device (48A, 48B).

8. Method for controlling a straddle-type vehicle with:
a transmission (13);
an actuator (23) that operates the transmission (13) to change a transmission ratio thereof;
a controller (30) that controls the transmission ratio of the transmission (13) by means of the actuator (23);
a braking device (48A, 48B) that applies a braking force to the vehicle; and
an accelerator operation member for a rider to operate,
**characterised in that** the method comprises at least one of the following steps:
determining the timing of change of the transmission ratio toward a low-speed according to an amount of operation of the accelerator operation member;
determining the timing of change of the transmission ratio toward the low-speed when the braking device (48A, 48B) is activated, where the timing is determined according to a degree of activation of the braking device (48A, 48B), and
restricting the change of the transmission ratio toward the low-speed the timing of which is determined by a brake activation time processing unit (34d) of the controller (30), when the braking device (48A, 48B) is activated and the accelerator operation member is operated.

9. Method according to claim 8, wherein the change of the transmission ratio toward the low-speed is prohibited by the controller (30) when the braking device (48A, 48B) is activated and the accelerator operation member is operated.

10. Method according to claim 8, wherein processing to delay the timing of change of the transmission ratio toward the low-speed is performed by the controller (30), when the braking device (48A, 48B) is activated and the accelerator operation member is operated.

## Patentansprüche

1. Grätschsitz-Fahrzeug, umfassend:
eine Kraftübertragung (13);
ein Betätigungselement (23), ausgelegt zum Betätigen der Kraftübertragung (13), um deren Übersetzungsverhältnis zu ändern;
einen Einsteller (30), ausgelegt zum Steuern des Übersetzungsverhältnisses der Kraftübertragung (13) durch das Betätigungselement (23);
eine Bremsvorrichtung (48A, 48B), ausgelegt zum Aufbringen einer Bremskraft auf das Fahrzeug; und
ein Gasbetätigungselement für einen Motorradfahrer zum Betätigen,
wobei der Einsteller (30) umfasst
eine normale Verarbeitungseinheit (34b), ausgelegt zum Bestimmen des zeitlichen Verlaufs einer Änderung des Übersetzungsverhältnisses in einen kleineren Gang nach einem Betätigungsgrad des Gasbetätigungselements, und
**dadurch gekennzeichnet, dass**
eine Bremsenaktivierungszeit-Verarbeitungseinheit (34d) ausgelegt ist zum Bestimmen des zeitlichen Verlaufs einer Änderung des Übersetzungsverhältnisses in den kleineren Gang, wenn die Bremsvorrichtung (48A, 48B) in Betrieb gesetzt ist, wobei der zeitliche Verlauf nach einem Betätigungsgrad der Bremsvorrichtung (48A, 48B) bestimmt wird, und
der Einsteller (30) ausgelegt ist, um die Änderung des Übersetzungsverhältnisses in den kleineren Gang zu beschränken, deren zeitlicher Verlauf durch die Bremsbetätigungszeit-Verarbeitungseinheit (34d) bestimmt wird, wenn die Bremsvorrichtung (48A, 48B) in Betrieb gesetzt wird und das Gasbetätigungselement betätigt wird.

2. Grätschsitz-Fahrzeug nach Anspruch 1, wobei der Einsteller (30) die Änderung des Übersetzungsverhältnisses in den kleineren Gang verhindert, wenn die Bremsvorrichtung (48A, 48B) in Betrieb gesetzt wird und das Gasbetätigungselement betätigt wird.

3. Grätschsitz-Fahrzeug nach Anspruch 1, wobei der Einsteller (30) eine Verarbeitung zum Verzögern des zeitlichen Verlaufs einer Änderung des Übersetzungsverhältnisses in den kleineren Gang durchführt, wenn die Bremsvorrichtung (48A, 48B) in Betrieb gesetzt wird und das Gasbetätigungselement betätigt wird.

4. Grätschsitz-Fahrzeug nach einem der Ansprüche 1 bis 3, des Weiteren umfassend, als Bremsvorrichtungen, eine vordere Bremsvorrichtung (48A), die eine Bremskraft auf ein Vorderrad (2) aufbringt und eine hintere Bremsvorrichtung (48B), die eine Bremskraft auf ein Hinterrad (3) aufbringt,
wobei der Einsteller (30) die Änderung des Übersetzungsverhältnisses in den kleineren Gang beschränkt, wenn die hintere Bremsvorrichtung (48B) in Betrieb gesetzt wird und das Gasbetätigungselement betätigt wird.

5. Grätschsitz-Fahrzeug nach einem der Ansprüche 1 bis 4, des Weiteren umfassend, als Bremsvorrichtungen (48A, 48B), eine vordere Bremsvorrichtung (48A), die eine Bremskraft auf ein Vorderrad (2) aufbringt, und eine hintere Bremsvorrichtung (48B), die eine Bremskraft auf ein Hinterrad (3) aufbringt,
wobei die normale Verarbeitungseinheit (34b) den zeitlichen Verlauf der Änderung des Übersetzungsverhältnisses in den kleineren Gang nach dem Betätigungsgrad des Gasbetätigungselements bestimmt, wenn keine der vorderen Bremsvorrichtung (48A) und der hinteren Bremsvorrichtung (48B) in Betrieb gesetzt wird, und wenn die vordere Bremsvorrichtung (48A) nicht in Betrieb gesetzt wird, jedoch die hintere Bremsvorrichtung (48B) in Betrieb gesetzt wird, und
der Einsteller (30) die Änderung des Übersetzungsverhältnisses in den kleineren Gang beschränkt, wenn die hintere Bremsvorrichtung (48B) in Betrieb gesetzt wird und das Gasbetätigungselement betätigt wird.

6. Grätschsitz-Fahrzeug nach Anspruch 5, wobei der Einsteller (30) das Verarbeiten der Bremsenaktivierungszeit-Verarbeitungseinheit (34d) ausführt, wenn die vordere Bremsvorrichtung (48A) in Betrieb gesetzt wird.

7. Grätschsitz-Fahrzeug nach einem der Ansprüche 1 bis 6, wobei eine Verzögerung des Fahrzeugs als Aktivierungsgrad der Bremsvorrichtung (48A, 48B) genutzt wird.

8. Verfahren zur Steuerung eines Grätschsitz-Fahrzeugs mit:
einer Kraftübertragung (13);
einem Betätigungselement (23), das die Kraftübertragung (13) betätigt, um deren Übersetzungsverhältnis zu ändern;
einem Einsteller (30), der das Übersetzungsverhältnis der Kraftübertragung (13) durch das Betätigungselement (23) steuert;
einer Bremsvorrichtung (48A, 48B), die eine Bremskraft auf das Fahrzeug aufbringt; und
einem Gasbetätigungselement für einen Motorradfahrer zum Betätigen,
**dadurch gekennzeichnet, dass** das Verfahren zumindest einen der folgenden Schritte umfasst:
Bestimmen des zeitlichen Verlaufs einer Änderung des Übersetzungsverhältnisses in einen kleineren Gang nach einem Betätigungsgrad des Gasbetätigungselements;
Bestimmen des zeitlichen Verlaufs einer Änderung des Übersetzungsverhältnisses in den kleineren Gang, wenn die Bremsvorrichtung (48A, 48B) in Betrieb gesetzt wird, wobei der zeitliche Verlauf nach einem Aktivierungsgrad der Bremsvorrichtung (48A, 48B) bestimmt wird, und
Beschränken der Änderung des Übersetzungsverhältnisses in den kleineren Gang, deren zeitlicher Verlauf durch eine Bremsaktivierungszeit-Verarbeitungseinheit (34d) des Einstellers (30) bestimmt wird, wenn die Bremsvorrichtung (48A, 48B) in Betrieb gesetzt wird und das Gasbetätigungselement betätigt wird.

9. Verfahren nach Anspruch 8, wobei die Änderung des Übersetzungsverhältnisses in den kleineren Gang durch den Einsteller (30) verhindert wird, wenn die Bremsvorrichtung (48A, 48B) in Betrieb gesetzt wird und das Gasbetätigungselement betätigt wird.

10. Verfahren nach Anspruch 8, wobei eine Verarbeitung zum Verzögern des zeitlichen Verlaufs einer Änderung des Übersetzungsverhältnisses in den kleineren Gang durch den Einsteller (30) durchgeführt wird, wenn die Bremsvorrichtung (48A, 48B) in Betrieb gesetzt wird und das Gasbetätigungselement betätigt wird.

## Revendications

1. Véhicule du type à enfourcher comprenant :
une transmission (13) ;
un dispositif d'actionnement (23) adapté à actionner la transmission (13) pour changer son rapport de transmission ;
un contrôleur (30) adapté à commander le rapport de transmission de la transmission (13) au moyen du dispositif d'actionnement (23) ;
un dispositif de freinage (48A, 48B) adapté à appliquer une force de freinage au véhicule ; et
un élément d'actionnement d'accélérateur destiné à être actionné par un conducteur,
dans lequel le contrôleur (30) comporte
une unité de traitement normal (34b) adaptée à déterminer le moment du changement de rapport de transmission vers une vitesse basse en fonction de l'importance de l'actionnement de l'élément d'actionnement d'accélérateur, et **caractérisé par**
une unité de traitement de temps d'activation de frein (34d) adaptée à déterminer le moment du changement de rapport de transmission vers la vitesse basse lorsque le dispositif de freinage (48A, 48B) est activé, où le moment est déterminé en fonction du degré d'activation du dispositif de freinage (48A, 48B), et
le contrôleur (30) est adapté à limiter le changement de rapport de transmission vers la vitesse basse dont le moment est déterminé par l'unité de traitement de temps d'activation de frein (34d), lorsque le dispositif de freinage (48A, 48B) est activé et l'élément d'actionnement d'accélérateur est actionné.

2. Véhicule du type à enfourcher selon la revendication 1, dans lequel le contrôleur (30) interdit le changement de rapport de transmission vers la vitesse basse lorsque le dispositif de freinage (48A, 48B) est activé et l'élément d'actionnement d'accélérateur est actionné.

3. Véhicule du type à enfourcher selon la revendication 1, dans lequel le contrôleur (30) effectue un traitement pour retarder le moment du changement de rapport de transmission vers la vitesse basse, lorsque le dispositif de freinage (48A, 48B) est activé et l'élément d'actionnement d'accélérateur est actionné.

4. Véhicule du type à enfourcher selon l'une quelconque des revendications 1 à 3, comprenant en outre, en tant que dispositifs de freinage, un dispositif de freinage avant (48A) qui applique une force de freinage à la roue avant (2) et un dispositif de freinage arrière (48B) qui applique une force de freinage à la roue arrière (3),
dans lequel le contrôleur (30) limite le changement de rapport de transmission vers la vitesse basse lorsque le dispositif de freinage arrière (48B) est activé et l'élément d'actionnement d'accélérateur est actionné.

5. Véhicule du type à enfourcher selon l'une quelconque des revendications 1 à 4, comprenant en outre, en tant que dispositifs de freinage (48A, 48B), un dispositif de freinage avant (48A) qui applique une force de freinage à la roue avant (2) et un dispositif de freinage arrière (48B) qui applique une force de freinage à la roue arrière (3),
dans lequel l'unité de traitement normal (34b) détermine le moment du changement de rapport de transmission vers la vitesse basse en fonction de l'importance d'actionnement de l'élément d'actionnement d'accélérateur lorsqu'aucun du dispositif de freinage avant (48A) et du dispositif de freinage arrière (48B) n'est activé, et lorsque le dispositif de freinage avant (48A) n'est pas activé mais le dispositif de freinage arrière (48B) est activé, et
le contrôleur (30) limite le changement de rapport de transmission vers la vitesse basse lorsque le dispositif de freinage arrière (48B) est activé et l'élément d'actionnement d'accélérateur est actionné.

6. Véhicule du type à enfourcher selon la revendication 5, dans lequel le contrôleur (30) exécute le traitement de l'unité de traitement de temps d'activation de frein (34d) lorsque le dispositif de freinage avant (48A) est activé.

7. Véhicule du type à enfourcher selon l'une quelconque des revendications 1 à 6, dans lequel la décélération du véhicule est utilisée en tant que degré d'activation du dispositif de freinage (48A, 48B).

8. Procédé de commandes d'un véhicule du type à enfourcher avec :
une transmission (13) ;
un dispositif d'actionnement (23) qui actionne la transmission (13) pour changer son rapport de transmission ;
un contrôleur (30) qui commande le rapport de transmission de la transmission (13) au moyen du dispositif d'actionnement (23) ;
un dispositif de freinage (48A, 48B) qui applique une force de freinage au véhicule ; et
un élément d'actionnement d'accélérateur destiné à être actionné par un conducteur,
**caractérisé en ce que** le procédé comprend au moins une des étapes suivantes :
la détermination du moment du changement de rapport de transmission vers une vitesse basse en fonction de l'importance de l'actionnement de l'élément d'actionnement d'accélérateur ;
la détermination du moment du changement de rapport de transmission vers la vitesse basse lorsque le dispositif de freinage (48A, 48B) est activé, où le moment est déterminé en fonction du degré d'activation du dispositif de freinage (48A, 48B), et
la limitation du changement de rapport de transmission vers la vitesse basse dont le moment est déterminé par l'unité de traitement de temps d'activation de frein (34d) du contrôleur (30), lorsque le dispositif de freinage (48A, 48B) est activé et l'élément d'actionnement d'accélérateur est actionné.

9. Procédé selon la revendication 8, dans lequel le changement de rapport de transmission vers la vitesse basse est interdit par le contrôleur (30) lorsque le dispositif de freinage (48A, 48B) est activé et l'élément d'actionnement d'accélérateur est actionné.

10. Procédé selon la revendication 8, dans lequel le traitement pour retarder le moment du changement de rapport de transmission vers la vitesse basse est effectué par le contrôleur (30), lorsque le dispositif de freinage (48A, 48B) est activé et l'élément d'actionnement d'accélérateur est actionné.
